Europäisches Patentamt

European Patent Office

Office européen des brevets

(19)

(11) Veröffentlichungsnummer: **0 192 219 B1**

# EUROPÄISCHE PATENTSCHRIFT

(45) Veröffentlichungstag der Patentschrift: **03.04.91**

(21) Anmeldenummer: **86102016.2**

(22) Anmeldetag: **17.02.86**

(51) Int. Cl.⁵: **F02B 19/10, F01N 3/18,**
**F02B 19/12, F02B 19/14,**
**F02B 37/00, F02B 47/08**

---

(54) Betriebsverfahren einer Brennkraftmaschine.

---

(30) Priorität: **22.02.85 DE 3506217**

(43) Veröffentlichungstag der Anmeldung:
**27.08.86 Patentblatt 86/35**

(45) Bekanntmachung des Hinweises auf die
Patenterteilung:
**03.04.91 Patentblatt 91/14**

(84) Benannte Vertragsstaaten:
**DE FR GB IT SE**

(56) Entgegenhaltungen:
**DE-A- 2 045 874      DE-A- 2 611 806**
**DE-A- 2 615 944      DE-A- 2 837 233**
**DE-A- 2 841 522      FR-A- 2 322 264**
**US-A- 4 210 105      US-A- 4 236 490**
**US-A- 4 350 129**

**VDI-BERICHTE, Nr. 351, Seiten 131-150, Düsseldorf, MENNE et al.: "Wege zu niedrigeren Abgaswerten"**

(73) Patentinhaber: **FEV Forschungsgesellschaft für Energietechnik und Verbrennungsmotoren mbH**
**Jülicher Strasse 342-352**
**W-5100 Aachen(DE)**

(72) Erfinder: **Pischinger, Franz, Prof. Dr. techn.**
**Im Erkfeld 4**
**W-5100 Aachen(DE)**

(74) Vertreter: **Fischer, Friedrich B., Dr.-Ing.**
**Saarstrasse 71**
**W-5000 Köln 50 (Rodenkirchen)(DE)**

---

**Beschreibung**

Die Erfindung bezieht sich auf ein Betriebsverfahren einer einen nachgeschalteten 3-Weg-Katalysator umfassenden Brennkraftmaschine, bei dem in einen Brennraum ein mit rückgeführtem Abgas vermischtes Brennstoff-Luft-Gemisch eingebracht und das Verhältnis der in den Brennraum eingebrachten Luftmenge zu der in den Brennraum eingebrachten Brennstoffmenge auf Werte im nah-stöchiometrischen Bereich geregelt wird.

Im Zusammenhang mit den Bemühungen, bei Brennkraftmaschinen mit innerer Verbrennung die Schadstoffemission zu verringern, ist vorgeschlagen worden, Motoren dieser Art mit nah-stöchiometrischem Brennstoff-Luft-Verhältnis und nachgeschaltetem 3-Weg-Katalysator zu betreiben, um den Vorteil einer gleichzeitigen Verminderung der drei Schadstoff-Komponenten $NO_x$, CO und CH zu erreichen.

Diesem Vorteil stehen jedoch erhebliche Nachteile gegenüber: Infolge der hohen Rohemission des Motors treten wegen nicht 100%iger Konversionsrate hohe Emissionen hinter dem katalytischen Konverter auf. Bei nachlassender Wirkung des katalytischen Konverters besteht daher die Gefahr erhöhter Emissionen. Auch kann die hohe thermische Beanspruchung des Motors eine Zurücknahme der Nennleistung erfordern, und die gesteigerte Klopfgefahr bei Betrieb mit nah-stöchiometrischem Gemisch kann zur Zurücknahme des Verdichtungsverhältnisses zwingen, so daß der effektive Wirkungsgrad verschlechtert wird. Schließlich wird auch durch die hohen Prozeßtemperaturen bei nah-stöchiometrischem Gemisch aufgrund hoher Wandwärmeverluste der Gütegrad negativ beeinflußt.

Es hat sich nun gezeigt, daß diesen Nachteilen durch zusätzliche Abgasrückführung teilweise abgeholfen werden kann, wie es in US-A-4 350 129 beschrieben ist. Die $NO_x$-Rohemission sinkt, und das rückgeführte Abgas bewirkt als inerte Komponente eine Absenkung der Prozeßtemperaturen, so daß die Verdichtung auf einem höheren Wert belassen werden kann. Dieses Vorgehen hat indessen den Nachteil, daß das rückgeführte Abgas die Brenngeschwindigkeiten und damit den effektiven Wirkungsgrad negativ beeinflußt. Auch können Zündaussetzer auftreten, die den Katalysator gefährden.

In der genannten US-A-4 350 129 ist ein Verfahren der eingangs bezeichneten Art bei einem fremdgezündeten Motor (Ottomotor) beschrieben, bei dem in einen nicht unterteilten Brennraum (ohne Vorkammer) Abgas zurückgeführt wird. Hinter dem Abgaskrümmer wird der $O_2$-Gehalt im Abgas gemessen, und es wird das Frischgemisch im nah-stöchiometrischen Bereich geregelt, um einen nachgeschalteten Drei-Weg-Katalysator betreiben zu können. Der Motor weist zwei Zündkerzen pro Zylinder auf und trägt damit dem schlechten Zündverhalten von Gemischen, die Abgasanteile enthalten, Rechnung. Dabei ist zu beachten, daß die Rohemissionen von Motoren dieser Art um so stärker verbessert werden, je mehr Abgas in der Zylinderladung enthalten ist. Die Zündung des Gemisches setzt aber Grenzen. Mit einer Zündkerze pro Zylinder wäre die verträgliche Abgasmenge daher geringer als bei zwei Zündkerzen.

Ein anderer Lösungsweg ist in DE-A-26 15 944 beschrieben. Auch hier handelt es sich um einen fremdgezündeten Motor (Ottomotor). Mit dem Hauptbrennraum, in den zur Verminderung der $NO_x$-Entstehung Abgas rückgeführt wird, ist eine Vorkammer verbunden, in der gut zündfähiges Gemisch durch eine Fremdzündquelle gezündet wird. Dabei wird zwar das Verhältnis der insgesamt zugeführten Brennstoff- und Luftmengen auf Werten im nah-stöchiometrischen Bereich gehalten, jedoch wird zur Abgasnachbehandlung der Auspuffkrümmer wärmeisoliert ausgeführt, so daß das aus dem Zylinder austretende Abgas seine Temperatur eine Zeitlang beibehält. Durch Zugabe von zusätzlicher Luft (Sekundärluft) in den Abgasstrom werden dann die noch reagierbaren Schadstoffkomponenten Kohlenmonoxid (CO) und unverbrannte Kohlenwasserstoffe (HC) nach Art eines Thermoreaktors aufoxidiert. Ein solcher Thermoreaktor ermöglicht keine Konvertierungsrate, die die künftig gestellten Anforderungen hinsichtlich der Begrenzung der Schadstoffemission zu erfüllen geeignet ist. Insbesondere ist mit einem Thermoreaktor eine Verminderung der besonders schädlichen Emission von Stickoxiden ($NO_x$) nicht möglich.

Der Erfindung liegt die Aufgabe zugrunde, die beschriebenen Grenzen und Nachteile der bekannten Verfahren zu überwinden und unter Ausnutzung der durch das Selbstzündungsverfahren (Dieselverfahren) gegebenen Vorteile eine Reduzierung der Schadstoffemission mit einer Wirksamkeit zu erreichen, wie sie bisher nicht für erreichbar gehalten wurde, wobei zugleich ein sicheres, zuverlässiges Zünden des Gemisches aus Luft, Brennstoff und zusätzlich rückgeführtem Abgas erreicht wird, um die gefährlichen Wirkungen von Zündaussetzern zu vermeiden.

Dies wird bei einem Verfahren der eingangs bezeichneten Art dadurch erreicht, daß in eine zum Brennraum gehörige Vorkammer, die mit einem zum Brennraum gehörigen Hauptbrennraum über wenigstens eine Öffnung in Verbindung steht, beim Ladungswechsel Luft und gegen Ende der Verdichtung ein selbstzündfähiger Brennstoff zur Einleitung des Verbrennungsvorganges eingebracht wird, wobei das Verhältnis von der in die Vorkammer eingebrachten Luftmenge zu der in die Vorkammer eingebrachten Brennstoffmenge nicht geregelt wird, und daß das Verhältnis der zusätzlich direkt in den Hauptbrennraum eingebrachten Luftmenge zu der zusätzlich direkt in den Hauptbrennraum eingebrachten Brennstoffmenge derart geregelt wird, daß das Verhältnis der dem gesamten Brennraum zugeführten Luftmenge zu der dem gesamten Brennraum zugeführten Brennstoffmenge im nah-stöchiometrischen Bereich liegt. Das nicht zu regelnde Verhältnis der in die Vorkammer eingebrachten Luft- und Brennstoffmenge bedeutet einen minimalen technischen Aufwand bezüglich der Brennstoffeinspritzung z.B. mit zeitlich und hubmäßig konstanter Plungerbewegung.

Bei dem Verfahren gemäß der Erfindung befindet sich ein mit rückgeführtem Abgas gemischtes, im wesentlichen homogenes Brennstoff-Luft-Gemisch im Hauptbrennraum. Durch die Überströmkanäle gelangen die heißen Verbrennungsprodukte und die Flammenfront mit hoher thermischer und kinetischer Energie von der Vorkammer in den Hauptbrennraum, wo das wenig zündfreudige Brennstoff-Luft-Abgasgemisch entzündet wird und sicher durchbrennt. Durch diese Betriebsweise wird erreicht, daß durch die Abgasrückführung die Prozeßtemperaturen abgesenkt werden, was sich sowohl auf die Emissionen und den Prozeßwirkungsgrad als auch auf die thermische Beanspruchung des Motors günstig auswirkt.

Die Betriebsweise mit nah-stöchiometrischem Brennstoff-Luft-Verhältnis ermöglicht es, auch die ohnehin niedrigen Rohemissionen des Motors durch einen ihm nachgeschalteten Drei-Weg-Katalysator weiter drastisch zu senken.

Die Erfindung wird nachfolgend anhand der Zeichnungen näher beschrieben.

Fig. 1 zeigt schematisch einen Längsschnitt durch eine Kolben-Zylinder-Anordnung mit dem Zylinderkopf einer Brennkraftmaschine zur Ausübung des Verfahrens gemäß der Erfindung.

Fig. 2 zeigt in größerem Maßstab eine bevorzugte Ausführungsform eines Vorkammersystems, wie es zur Ausübung des Verfahrens gemäß der Erfindung mit Vorteil verwendet werden kann.

Fig. 3 zeigt schematisch das Zusammenwirken einer Brennkraftmaschine zur Ausübung der Erfindung mit geeigneten Hilfsaggregaten und Installationen.

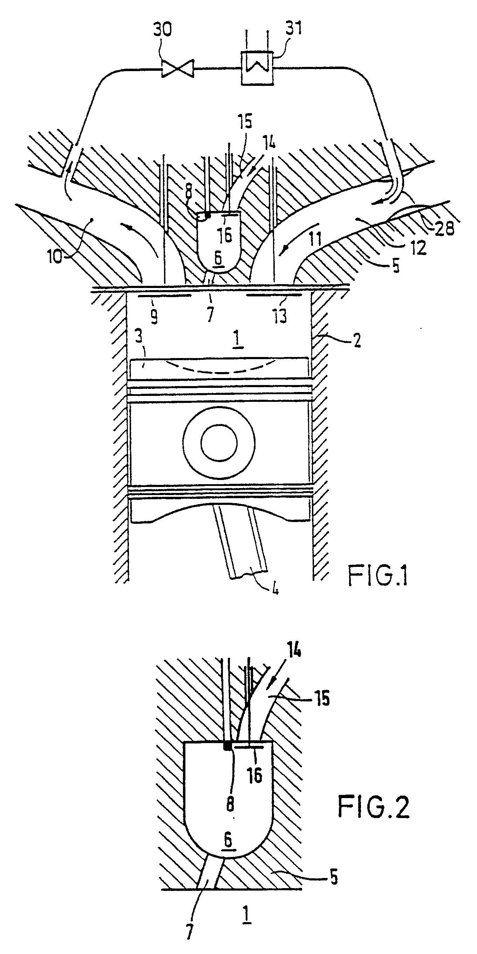

Fig. 1 zeigt am Beispiel einer 4-Takt-Hubkolben-Brennkraftmaschine eine Ausgestaltung der Erfindung. Hauptbrennraum 1, der durch Zylinder 2, Kolben 3 und Zylinderkopf 5 eingeschlossen wird, steht mit einer Vorkammer 6 über einen oder mehrere Überströmkanäle 7 in Verbindung. Der Kolben 3 ist durch Schubstange 4 mit einem konventionellen Kurbeltrieb verbunden. Beim Ladungswechsel strömen die Abgase durch ein momentan geöffnetes Ventil 9 und Kanal 10 im Zylinderkopf 5 in das Auspuffsystem. Anschließend strömt Frischgemisch 11, bestehend aus Luft, Brennstoff und zurückgeführtem Abgas, durch Kanal 12 und ein jetzt geöffnetes Ventil 13 in den Hauptbrennraum 1. Das rückgeführte Abgas wird dem Abgaskanal 10 entnommen, über ein Regelventil 30 und einen Kühler 31 in den Ansaugkanal 12 geführt und ist damit Teil des Frischgemisches 11. Die Einführung des Abgases in den Kanal 12 kann durch eine düsenartige Verengung 28 des Kanals 12 unterstützt werden. In die Vorkammer 6 oder ggf. auch in mehrere Vorkammern wird beim Ladungswechsel Luft und gegen Ende der Verdichtung ein selbstzündfähiger Brennstoff entsprechend dem dieselmotorischen Verbrennungsverfahren mittels Einspritzdüse 8 eingebracht.

Fig. 2 zeigt eine entsprechende Ausgestaltung der Vorkammer 6, in die durch den Kanal 15 Luft in die Vorkammer 6 einströmt.

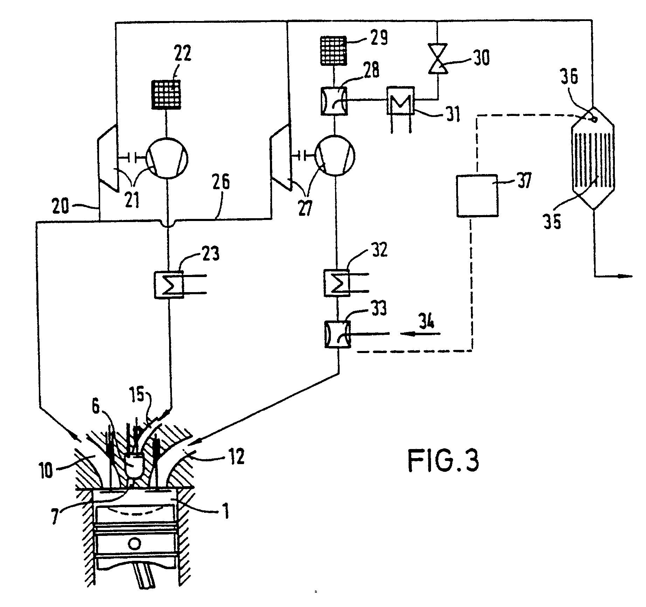

Fig. 3 zeigt eine vorteilhafte Anordnung des Motors und der Hilfsaggregate mit Installationen. Die Abgase, die den Motor aus den Auslaßkanälen 10 verlassen, werden in zwei Teilströme 20 und 26 aufgeteilt. Der Teilstrom 20 strömt durch die Turbine eines Abgasturboladers 21 und treibt damit den Verdichter an, der über Luftfilter 22 Frischluft ansaugt und verdichtet. In einem Nachkühler 23 wird die Frischluft rückgekühlt und strömt durch den Kanal 15 in die Vorkammer 6 des Motors ein. Das in der Vorkammer befindliche Restgas wird von der einströmenden Luft durch die Überströmkanäle 7 aus der Vorkammer in den Hauptbrennraum 1 ausgespült.

Der Abgasteilstrom 26 strömt durch die Turbine eines Abgasturboladers 27, dessen Verdichter ein Gemisch aus Frischluft und zurückgeführtem Abgas ansaugt. Diese Gemisch wird in einem Mischer 28 gebildet, der die über ein Luftfilter 29 angesaugte Frischluft mit Abgas, das über ein Regelventil 30 und einen Kühler 31 dem Mischer zugeführt wird, in einem bestimmten Verhältnis mischt. Der Verdichter des Abgasturboladers 27 verdichtet dieses Gemisch. Nach Rückkühlung in einem Kühler 32 wird dem Luft-Abgas-Gemisch in einem Mischer 33 Brennstoff 34 zugemessen und mit diesem vermischt. Das gebildete Luft-Abgas-Brennstoff-Gemisch strömt durch den Kanal 12 in den Hauptbrennraum 1 des Motors ein.

Die Betriebsweise mit nah-stöchiometrischem Brennstoff-Luft-Verhältnis ermöglicht es, die ohnehin niedrigen Rohemissionen des Motors durch einen ihm nachgeschalteten Drei-Weg-Katalysator weiter drastisch zu senken.

Die hierfür erforderlichen Installationen sind in Fig. 3 dargestellt. Das Abgas wird einem katalytischen Konverter 35 (3-Weg-Katalysator) zugeführt, an dessen Eintritt mittels einer Sonde 36 der Sauerstoffgehalt des Abgases gemessen wird. Das Meßsignal der Sonde 36 wird an eine Regeleinheit 37 geleitet, die an den Mischer 33 Steuerbefehle gibt, die zur Einhaltung eines nah-stöchiometrischen Verhältnisses zwischen insgesamt angesaugter Verbrennungsluft und zugeführtem Brennstoff führen. Unter Einhaltung dieser Randbedingung werden die schädlichen Bestandteile der Abgase im katalytischen Konverter 35 chemisch umgewandelt.

Es wird nach dem gegenwärtigen Stand für möglich gehalten, mit Hilfe innermotorischer Maßnahmen bei konsequenter Weiterentwicklung ähnlich niedrige Schadstoff-Emissionsniveaus wie bei der Abgasnachbehandlung durch 3-Weg-Katalysator zu erreichen. Durch eine Kombination der optimalen Ergebnisse der beiden im Grundsatz widerstreitenden Maßnahmen zur Erzielung noch niedrigerer Emissionsniveaus bei Selbstzünder-Motoren (Dieselmotoren) kann für die Schadstoffe $NO_x$, CO und HC ein niedriges Emissionsniveau von bisher nicht bekannter Güte erreicht werden.

## Ansprüche

1. Betriebsverfahren einer einen nachgeschalteten 3-Weg-Katalysator umfassenden Brennkraftmaschine, bei dem in einen Brennraum (1, 6) ein mit rückgeführtem Abgas vermischtes Brennstoff-Luft-Gemisch eingebracht und das Verhältnis der in den Brennraum (1, 6) eingebrachten Luftmenge zu der in den Brennraum (1, 6) eingebrachten Brennstoffmenge auf Werte im nah-stöchiometrischen Bereich geregelt wird, dadurch gekennzeichnet, daß in eine zum Brennraum (1, 6) gehörige Vorkammer (6), die mit einem zum Brennraum gehörigen Hauptbrennraum (1) über wenigstens eine Öffnung (7) in Verbindung steht, beim Ladungswechsel Luft und gegen Ende der Verdichtung ein selbstzündfähiger Brennstoff zur Einleitung des Verbrennungsvorganges eingebracht wird, wobei das Verhältnis von der in die Vorkammer (6) eingebrachten Luftmenge zu der in die Vorkammer (6) eingebrachten Brennstoffmenge nicht geregelt wird, und daß das Verhältnis der zusätzlich direkt in den Hauptbrennraum (1) eingebrachten Luftmenge zu der zusätzlich direkt in den Hauptbrennraum (1) eingebrachten Brennstoffmenge derart geregelt wird, daß das Verhältnis der dem gesamten Brennraum (1, 6) zugeführten Luftmenge zu der dem gesamten Brennraum (1, 6) zugeführten Brennstoffmenge im nah-stöchiometrischen Bereich liegt.

2. Betriebsverfahren nach Anspruch 1, dadurch gekennzeichnet, daß die den Motor verlassenden Abgase in zwei Teilströme (20, 26) aufgeteilt werden, welche die Verdichter von zwei Abgasturboladern (21, 27) für die Vorkammer (6) und den Hauptbrennraum (1) antreiben.

## Claims

1. A method of operating an internal combustion engine comprising a downstream three-way catalysor, in which a fuel-air mixture mixed with recycled exhaust gas is introduced into a combustion chamber (1, 6) and the ratio of air introduced into the combustion chamber (1, 6) to fuel introduced into the combustion chamber (1, 6) is adjusted to values in the near-stoichiometric range, characterised in that, during the change of charge air and towards the end of the compression stroke, an auto-ignitable fuel is introduced into a pre-chamber (6) belonging to the combustion chamber (1, 6) and connected by at least one opening (7) to a main combustion chamber (1) belonging to the combustion chamber so as to begin the combustion process, and the ratio of air to fuel introduced into the pre-chamber (6) is not adjusted, and that the ratio of air additionally introduced directly into the pre-chamber (6) to fuel additionally introduced directly into the main combustion chamber (1) is adjusted so that the ratio of air introduced into the complete combustion chamber (1, 6) to fuel introduced into the complete combustion chamber (1, 6) is in the near-stoichiometric range.

2. A method according to claim 1, characterised in that the exhaust gas leaving the engine is divided into two partial streams (20, 26) which drive the compressors of two exhaust-driven superchargers (21, 27) for the pre-chamber (6) and the main combustion chamber (1).

## Revendications

1. Procédé d'exploitation d'un moteur à combustion interne comprenant un catalyseur trois voies branché en aval, dans lequel un mélange air-carburant mêlé à des gaz d'échappement renvoyés est introduit dans une chambre de combustion (1, 6), et le rapport entre la quantité d'air introduite dans la chambre de combustion (1, 6), et la quantité de carburant introduite dans la chambre de combustion (1, 6), est réglé à des valeurs situées dans la plage quasi stoechiométrique, caractérisé par le fait que, dans un pré-compartiment (6) faisant partie de la chambre de combustion (1, 6) et communiquant, par l' intermédiaire d'au moins un orifice (7), avec un compartiment principal de combustion (1) faisant partie de la chambre de combustion, l' on introduit de l'air lors de la variation de charge et, vers la fin de la compression, un carburant à faculté d'auto-inflammation, en vue de déclencher le processus de combustion, le rapport entre la quantité d'air introduite dans le pré-compartiment (6), et la quantité de carburant introduite dans le pré-compartiment (6), n'étant alors pas réglé ; et par le fait que le rapport entre la quantité d'air introduite additionnellement de manière directe dans le compartiment principal de combustion (1), et la quantité de carburant introduite additionnellement de manière directe dans le compartiment principal de combustion (1), est réglé de telle sorte que le rapport entre la quantité d'air délivrée à l'intégralité de la chambre de combustion (1, 6), et la quantité de carburant délivrée à l'intégralité de la chambre de combustion (1, 6), se situe dans la plage quasi stoechiométrique.

2. Procédé d'exploitation selon la revendication 1, caractérisé par le fait que les gaz d'échappement sortant du moteur sont scindés en deux flux partiels (20, 26), qui entraînent les compresseurs de deux turbocompresseurs à gaz d'échappement (21, 27) associés au précompartiment (6) et au compartiment principal de combustion (1).

FIG.1

FIG.2

FIG.3